(19) Europäisches Patentamt
European Patent Office
Office européen des brevets

(11) **EP 4 293 583 A1**

(12) **EUROPEAN PATENT APPLICATION**

(43) Date of publication:
**20.12.2023 Bulletin 2023/51**

(21) Application number: **22178858.1**

(22) Date of filing: **14.06.2022**

(51) International Patent Classification (IPC):
**G06N 20/00** (2019.01)      **G06N 3/04** (2023.01)
**G06N 3/08** (2023.01)

(52) Cooperative Patent Classification (CPC):
**G06N 20/00;** G06N 3/045; G06N 3/084

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **TOYOTA JIDOSHA KABUSHIKI KAISHA**
**Toyota-shi, Aichi-ken, 471-8571 (JP)**
• **Czech Technical University in Prague**
**16627 Praha 6 (CZ)**

(72) Inventors:
• **AL JUNDI, Rahaf**
**1140 BRUSSELS (BE)**
• **OLMEDA REINO, Daniel**
**1140 BRUSSELS (BE)**
• **CHUMERIN, Nikolay**
**1140 BRUSSELS (BE)**
• **ULC, Milan**
**16627 PRAHA (CZ)**
• **PATEL, Yash**
**16627 PRAHA (CZ)**

(74) Representative: **Cabinet Beau de Loménie**
**158, rue de l'Université**
**75340 Paris Cedex 07 (FR)**

(54) **METHOD AND DEVICE FOR TRAINING A CLASSIFICATION MODEL**

(57)    The invention concerns a computer-implemented method for training a classification model, said method comprising the steps of:
- obtaining (S10) a classification model comprising a representation backbone (320) configured to generate a representation of input samples and to group the input samples into clusters according to a similarity criteria of the representations associated to the input samples, the classification model further comprising a linear classifier (330) configured for assigning a vector P1 to a cluster, each component P1[k] of the vector P1 corresponding to an estimate of the probability of the cluster belonging to a class c[k], k ranging from 1 to K;
- jointly training (S20) the representation backbone and the linear classifier by minimizing a loss function which depends on parameters of the representation backbone and weights of the linear classifier; and,
- updating (S30) parameters of the representation backbone and weights of the linear classifier, so as to obtain an updated classification model.

```
┌─────────────────────────────────────────────────┐
│ Obtaining an automatic classification model      │
│ comprising a representation backbone and a        │──── S10
│ linear classifer                                  │
└─────────────────────────────────────────────────┘
                        │
                        ▼
┌─────────────────────────────────────────────────┐
│ Jointly training the representation backbone      │
│ and the linear classifier                         │──── S20
└─────────────────────────────────────────────────┘
                        │
                        ▼
┌─────────────────────────────────────────────────┐
│ Updating parameters of the representation         │
│ backbone and weights of the linear classifier     │──── S30
└─────────────────────────────────────────────────┘
```

**FIG.4A**

EP 4 293 583 A1

**Description**

<u>Field of the disclosure</u>

The present invention relates to the general field of automatic data processing. It relates more specifically to a method for training a classification model. The invention also relates to a device configured to perform said training method, a method for classifying data into classes, a device configured to perform said classification method, a method of improving a driver assistance system of a vehicle and a device configured to perform said method of improving a driver assistance system.

<u>Description of the Related Art</u>

Today, one of the most common uses of data is automatic classification. This tremendous success is largely due to a combination of various factors, including ever larger and qualitative datasets of data used for training, and ever more powerful computing resources (processing units) to manage such an amount of data.

Data object classification systems can classify data objects into one or more categories which can be pre-determined or not. For example, visual recognition systems can identify objects in images, i.e., classify input images as including objects from one or more object categories. Some data object classification systems use one or more artificial neural networks to classify an input data object.

Neural networks are machine learning models that employ one or more layers of neurons to generate an output, e.g., a classification, for a received input. Some neural networks include one or more non-terminal layers, named "hidden layers", in addition to an output layer. The output of each hidden layer is used as input to the next layer in the network, i.e., the next hidden layer or the output layer of the network. Each layer of the network generates an output from a received input in accordance with current values of a respective set of parameters. Typically, in a neural network-based classifier, a backbone network is used to automatically discover (or "learn") representations needed for feature detection or classification from input samples, and another part of the neural network-based classifier is used to automatically classify the input samples based on the learned representations.

Contrastive representation learning is a recent approach to learning representations by comparing among the samples. Instead of learning a signal from individual data samples one at a time, contrastive learning learns by comparing among different samples. The comparison is performed between positive pairs of "similar" input samples and negative pairs of "dissimilar" input samples.

The aim of contrastive learning can be summarized as follows: the representations of "similar" input samples should be mapped close together, while that of "dissimilar" input samples should be further away in the embedding space. Thus, by contrasting between samples of positive and samples of negative pairs, representations of positive pairs will be pulled together while representations of negative pairs are pushed far apart.

Contrastive methods are popular in comparison with cross-entropy minimization-based methods, since contrastive methods provide a simple yet powerful approach to learning representations, in a discriminative manner, both in supervised or self-supervised approaches.

However, a cross-entropy minimization method is still needed to train the final classification layer, which takes as inputs the outputs of the backbone network. So two distinct and consecutive learnings have to be implemented in such systems: a first learning to determine the optimal parameters of the backbone network, and then, a second learning to evaluate parameters (or weights) of the final classification layer.

There is thus room for improvement in the fields of learning and automatic classification.

<u>Summary of the disclosure</u>

The purpose of the present invention is to overcome all or some of the limitations of the prior art solutions, particularly those outlined here above, by providing a training solution that jointly trains the representation backbone and the linear classifier of a classification model.

According to the invention, the representation backbone and the linear classifier are "jointly trained" in that they are not trained one after the other as this is the case with the methods of the prior art, but are rather trained together in one step.

To this end, and according to a first aspect, the invention relates to a computer-implemented method for training a classification model. Said method comprises the steps of:

- obtaining a classification model comprising a representation backbone configured to generate a representation of input samples and to group the input samples into clusters according to a similarity criteria of the representations associated to the input samples, the classification model further comprising a linear classifier configured for assigning a vector P1 to a cluster, each component P1[k] of the vector P1 corresponding to an estimate of the probability of the cluster belonging to a class c[k], k ranging from 1 to K;

- jointly training the representation backbone and the linear classifier by minimizing a loss function which depends on parameters of the representation backbone and weights of the linear classifier; and,
- updating parameters of the representation backbone and weights of the linear classifier, so as to obtain an updated classification model.

In one implementation, the loss function corresponds to a sum of a first loss function optimizing the representation backbone and of a second loss function optimizing the linear classifier, the first loss function leads to group input samples of one cluster close together and far from input samples from other clusters, and the second loss function is configured to maximizing the similarity between vectors of a cluster and input samples belonging to said cluster.

In one implementation, the second loss function $\ell_{tt}$ is expressed as

$$\ell_{tt} = \frac{1}{N} \sum_{i}^{N} - \mathbf{z}_i^{\mathsf{T}} \boldsymbol{\theta}_{y_i}$$

with $N$ a **number** of samples, $\mathbf{z}_i$ the representation for the $i$ - $th$ sample having label $y_i \in \{1, ..., K\}$, and $\theta_{y_i} = (\theta_1, ..., \theta_K)$ the weights of the linear classifier.

In one implementation, training the linear classifier comprises minimizing the second loss function $\ell_{tt}$ by applying a gradient on the second loss function $\ell_{tt}$ such that

$$\frac{\partial \ell_{tt}}{\partial \boldsymbol{\theta}_k} = -\frac{1}{N} \sum_{i:y_i=k} \mathbf{z}_i$$

without impacting the parameters of the representation backbone, and the weights of the linear classifier are iteratively updated such that

$$\boldsymbol{\theta}_k^0 = \boldsymbol{\theta}_k^t + \eta \frac{1}{N} \sum_{i:y_i=k} \mathbf{z}_i^{t+1}$$

with $t$ an iteration index and $\eta$ a learning rate.

In one implementation, the method further comprises generating augmented views from the input samples, and the first loss function is a supervised contrastive loss $\ell_{SupCon}$ expressed as

$$\ell_{SupCon} = \frac{1}{2N} \Sigma_i^{2N} \ell_{SupCon}(\mathbf{z}_i, P_i)$$

and

$$\ell_{SupCon}(\mathbf{z}_i, P_i) =$$
$$-\frac{1}{|P_i|} \sum_{\mathbf{z}_p \in P_i} \log \frac{\exp(\text{sim}(\mathbf{z}_i, \mathbf{z}_p)/\tau)}{\sum_{j \neq i} \exp(\text{sim}(\mathbf{z}_i, \mathbf{z}_j)/\tau)} =$$

$$\frac{1}{|P_i|} \sum_{\mathbf{z}_p \in P_i} \left( -(\mathbf{z}_i^{\mathsf{T}} \mathbf{z}_p)/\tau + \log \sum_{j \neq i} \exp\left((\mathbf{z}_i^{\mathsf{T}} \mathbf{z}_j)/\tau\right) \right)$$

$$\text{sim}(\mathbf{z}_i, \mathbf{z}_j) = \frac{\mathbf{z}_i^{\top} \mathbf{z}_j}{\|\mathbf{z}_i\| \cdot \|\mathbf{z}_j\|}$$

with $(\mathbf{z}_i, \mathbf{z}_j)$ a pair of representations of two different augmented views of a same input sample, the cosine similarity, $P_i$ the set of representations $\mathbf{z}_p$ forming positive pairs for the i-th input sample, $j$ an index iterating over all input samples, $\mathbf{z}_i^{\top} \mathbf{z}_p$ the dot product between two vectors, and $\tau$ a temperature hyper-parameter controlling the sensitivity of the product.

In one implementation, the method further comprises generating augmented views from the input samples, and the first loss function is a simplified pairwise cross entropy loss $\ell_{\text{SPCE}}$ expressed as

$$\ell_{\text{SPCE}} = -\frac{1}{N} \sum_{i=1}^{N} \log \frac{\exp\left(\frac{1}{N} \sum_{j:y_j=y_i} \mathbf{z}_j^{\top} \mathbf{z}_i\right)}{\sum_{k=1}^{K} \exp\left(\frac{1}{N} \sum_{j:y_j=k} \mathbf{z}_j^{\top} \mathbf{z}_i\right)}$$

with $N$ a number of input samples, $(\mathbf{z}_i, \mathbf{z}_j)$ a pair of representations of two different augmented views of a same input sample, $\text{sim}(\mathbf{z}_i, \mathbf{z}_j) = \frac{\mathbf{z}_i^{\top} \mathbf{z}_j}{\|\mathbf{z}_i\| \cdot \|\mathbf{z}_j\|}$ the cosine similarity, $P_i$ the set of representations $\mathbf{z}_p$ forming positive pairs for the i-th input sample, j an index iterating over all input samples, $\mathbf{z}_i^{\top} \mathbf{z}_p$ the dot product between two vectors, and $\tau$ a temperature hyper-parameter controlling the sensitivity of the product.

In one implementation, the vector P1 assigned to a cluster is considered as a sample of said cluster, the sample and the vector P1 are in a same embedding space, and the loss function is configured to update parameters $\theta_{y_i}$ of the vector P1 assigned to that cluster so that said vector P1 is close to the samples of that cluster, and far from the samples of other clusters.

In one implementation, the method further comprises generating augmented views from the input samples, and the loss function is expressed as

$$\ell_{\text{ESupCon}} = \frac{1}{2N+K}\left(\sum_{k=1}^{K} \ell_{\text{clSup}}(\boldsymbol{\theta}_k) + \sum_i^{2N} \ell_{\text{SupCon}}(\mathbf{z}_i, P_i)\right)$$

with

- $N$ a number of input samples,
- $\theta_k$ a weight of the linear classifier,
- $P_i$ a set of representations $\mathbf{z}_p$ forming positive pairs for the i-th input sample,
- $\mathbf{z}_i$ the representation for the $i$ - $th$ sample having label $y_i \in \{1, ..., K\}$,
- $\ell_{\text{clSup}}(\boldsymbol{\theta}_k) = \frac{1}{2N_k} \sum_{i:y_i=k} \ell_{\text{clSup}}(\mathbf{z}_i, \boldsymbol{\theta}_k)$ with $N_k$ the number of the non-augmented samples in the k-th class, $\ell_{\text{clSup}}(\mathbf{z}_i, \boldsymbol{\theta}_{y_i}) = -\mathbf{z}_i^{\top} \boldsymbol{\theta}_{y_i} + \log\left(\sum_{k=1}^{K} \exp(\mathbf{z}_i^{\top} \boldsymbol{\theta}_k) + \sum_{j=1:j\neq i}^{2N} \exp(\mathbf{z}_i^{\top} \mathbf{z}_j)\right)$, $\mathbf{z}_i^{\top} \mathbf{z}_p$ the dot product between two vectors,

-
$$\ell_{\text{SupCon}}(\mathbf{z}_i, P_i) =$$
$$-\frac{1}{|P_i|} \sum_{\mathbf{z}_p \in P_i} \log \frac{\exp(\text{sim}(\mathbf{z}_i, \mathbf{z}_p)/\tau)}{\sum_{j \neq i} \exp(\text{sim}(\mathbf{z}_i, \mathbf{z}_j)/\tau)} =$$
$$\frac{1}{|P_i|} \sum_{\mathbf{z}_p \in P_i} \left(-(\mathbf{z}_i^{\top} \mathbf{z}_p)/\tau + \log \sum_{j \neq i} \exp\left((\mathbf{z}_i^{\top} \mathbf{z}_j)/\tau\right)\right)$$

with $(\mathbf{z}_i, \mathbf{z}_j)$ a pair of representations of two different views of a same input sample, $\text{sim}(\mathbf{z}_i, \mathbf{z}_j) = \frac{\mathbf{z}_i^{\top} \mathbf{z}_j}{\|\mathbf{z}_i\| \cdot \|\mathbf{z}_j\|}$ the

cosine similarity, $P_i$ the set of representations $\mathbf{z}_p$ forming positive pairs for the i-th input sample, j an index iterating over all input samples, $\mathbf{z}_i^\top \mathbf{z}_p$ the dot product between two vectors, and $\tau$ a temperature hyper-parameter controlling the sensitivity of the product.

According to a second aspect, the invention also relates to a computer program including instructions for executing a training method according to the invention when said program is executed by a computer.

This program can use any programming language and take the form of source code, object code or a code intermediate between source code and object code, such as a partially compiled form, or any other desirable form.

According to a third aspect, the invention also relates to a computer-readable information medium containing instructions of a computer program as described above.

The information medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

According to a fourth aspect, the invention also relates to a device for training a classification model, said device being configured to perform a training method according to the invention.

According to a fifth aspect, the invention also relates to a computer-implemented method for classifying input samples of an unlabelled set E' into classes c[K], k ranging from 1 to K, said method comprising :

- obtaining an updated classification model generated by performing the training method of the invention; and,
- classifying the input samples of set E' using the updated classification model.

According to a sixth aspect, the invention also relates to a computer program including instructions for executing a classification method according to the invention when said program is executed by a computer.

This program can use any programming language and take the form of source code, object code or a code intermediate between source code and object code, such as a partially compiled form, or any other desirable form.

According to a seventh aspect, the invention also relates to a computer-readable information medium containing instructions of a computer program as described above.

The information medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

According to a eighth aspect, the invention also relates to a device classifying input samples of an unlabelled set E' into classes c[K], k ranging from 1 to K, said device being configured to perform a classification method according to the invention.

According to a ninth aspect, the invention also relates to a computer-implemented method of improving a driver assistance system of a vehicle implementing the classification method according to the invention, and the input samples correspond to images captured by at least one sensor associated to said vehicle.

According to a tenth aspect, the invention also relates to a computer program including instructions for executing a method of improving a driver assistance system according to the invention when said program is executed by a computer.

This program can use any programming language and take the form of source code, object code or a code intermediate between source code and object code, such as a partially compiled form, or any other desirable form.

According to a eleventh aspect, the invention also relates to a computer-readable information medium containing instructions of a computer program as described above.

The information medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

According to a twelfth aspect, the invention also relates to a device for improving a driver assistance system, said device being configured to perform a method of improving a driver assistance system according to the invention.

Brief description of the drawings

How the present disclosure may be put into effect will now be described by way of example with reference to the appended drawings, in which:

- Figure 1A illustrates a particular implementation of a training device according to the invention,
- Figure 1B illustrates a particular implementation of a classification device according to the invention,
- Figure 2 is a functional representation of a classification system according to an implementation,
- Figure 3A illustrates an example of the hardware architecture of said training device,
- Figure 3B illustrates an example of the hardware architecture of said classification device,
- Figure 4A is a flowchart of the main steps of a training method according to the invention, and,
- Figure 4B is a flowchart of the main steps of a classification method according to the invention.

Description of the embodiments

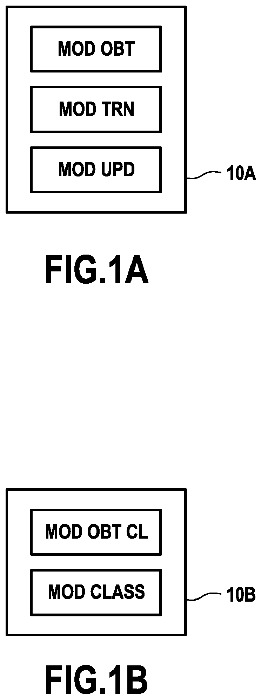

Figure 1A illustrates a particular implementation of a training device 10 according to the invention. Said training device 10A is based on (i.e. uses) an automatic classification model to classify input samples in given classes $c[k]$, k ranging from 1 to K. Said number K is fixed here and no limitation is attached to its value.

According to the invention, the classification model comprises a representation backbone and a linear classifier, which are not trained one after the other as this is the case with the methods of the prior art, but are rather jointly trained by minimizing a loss function which depends on parameters of the representation backbone and weights of the linear classifier.

Figure 1B illustrates a particular implementation of a classification device 10B according to the invention. Said classification device uses the classification model trained by the training device 10 as an input to classify input samples.

The rest of the description is aimed more specifically at a classification model trained and learned by means of a neural network. The invention remains applicable whatever the nature of the neural network considered (convolutional, perceptron, auto-encoder, recurrent, etc.), in particular for any deep neural network.

In addition, no limitation is attached to the kind of data that may be processed by the classification model. In the same way, no limitation is attached to the kind of classification that may be output based on the input (i.e. the nature of the classes $c[k]$ is not a limiting factor of the invention).

For example, if the input samples of the classification model are images or features that have been extracted from images, the output generated by the classification model for a given image may be an estimate of the probability that the image contains an image of an object belonging to given classes. Specifically, these may include, for example, images of road traffic taken by an autonomous vehicle or by a road-side unit, so that it can be determined whether vehicles in the image are at risk of collision.

According to another example, if the inputs of the classification model are Internet resources (e.g., web pages), documents, or portions of documents or features extracted from Internet resources, the output generated by the classification model for a given Internet resource, document, or portion of a document may be a score for each of a set of topics, with each score thus representing an estimate of the probability that the Internet resource, document, or document portion is about the topic.

According to another example, if the inputs of the classification model are features of an impression context for a particular advertisement, the output generated by the classification model may be a score that represents an estimate of the probability that the particular advertisement will be clicked on.

According to another example, if the inputs of the classification model are features of a personalized recommendation for a user, e.g., features characterizing the context for the recommendation, e.g., features characterizing previous actions taken by the user, the output generated by the classification model may be a score for each of a set of content items, with each score representing an estimate of the probability that the user will respond favourably to being recommended the content item.

According to another example, if the input of the classification model is text in one language, the output generated by the classifier may be a score for each of a set of pieces of text in another language, with each score representing an estimate of the probability that the piece of text in the other language is a proper translation of the input text into the other language.

According to another example, if the input of the classification model is a spoken utterance, a sequence of spoken utterances, or features derived from one of the two, the output generated by the classification model may be a score for each of a set of pieces of text, each score representing an estimate of the probability that the piece of text is the correct transcript for the utterance or sequence of utterances.

In general, the invention can find an application in any industrial and technical field where classification tasks have to be carried out. Examples of other typical technical applications of a classification algorithm may include, without limitation: classification of digital images (e.g. in health care, for example cardiac monitoring in order to detect irregular beats of a patient), video and audio or voice signals based on low-level characteristics (e.g. contours or pixel attributes for images).

The devices 10A and 10B are configured to perform processing to improve the accuracy of classifying data, but also to improve the way the classification model is trained, by implementing a method for training the classification model. Said method is referred to as "training method" hereafter. The trained classification model is then used as an input of a method for classifying input data. Said method is referred to as "classification method" hereafter.

By "improving the accuracy of classification", reference is made here to obtaining classification results that are more accurate than if the classification model is not trained according to the invention.

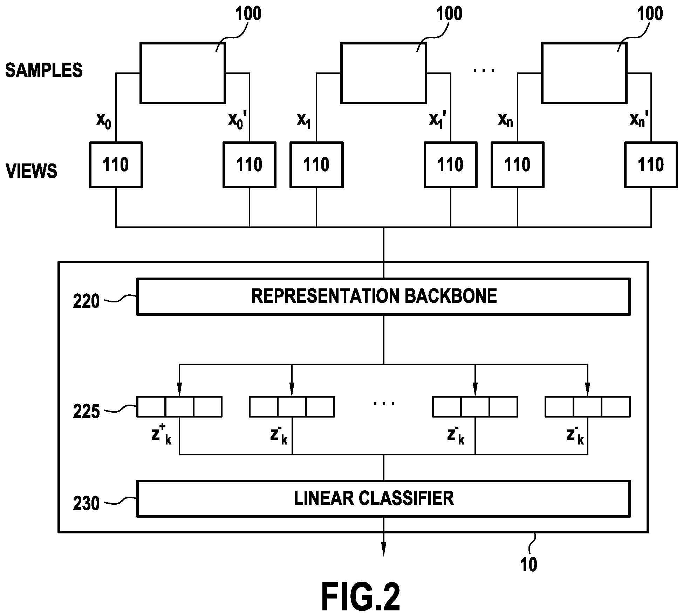

Figure 2 is a functional representation of a classification system 10 implementing a learning step, according to an implementation. Said classification system both comprises the training device 10A of Figure 1A, and the classification device 10B of Figure 1B.

According to this implementation, the training device 10A implements a supervised or self-supervised method, such as an instance discrimination-based method, to learn a representation. Accordingly, the training device 10A learns a representation by maximizing agreement of encoded features between two differently "augmented views" of input samples. Actually, a common technique to increase the diversity of a training dataset is to artificially augment this dataset by generating augmented views.

More precisely, different views 110 of a same input sample 100 are generated through a series of image augmentation methods. When the input sample is an image, these transformations can be random cropping and resizing, blur, color distortion or perspective distortion, etc. A (*xq*; *xk*) pair of query and key views is said to be "positive" when these two views 110 are created by applying different transformations on a same input sample, and is said to be "negative" otherwise.

When the input sample is an audio sample, transformations can be done on a generated spectrogram (e.g., by blocking out sections of the spectrogram when applying a frequency mask or a time mask), or rather on the raw audio sample before producing the spectrogram (e.g., by shifting audio to the left or the right by a random amount, by randomly modifying the frequency of parts of the audio sample, by randomly slowing down or speeding up the audio sample, or by adding noise to the audio sample).

A representation backbone, also named "encoder" 220, then generates feature vectors, also named "representations" 225, from the augmented data views 110. There is no restriction on the choice of the encoder, but a ResNet model is usually used for image data because of its simplicity. In that case, a representation $Z \subset \mathbb{R}^d$ is generated that corresponds to the output of the average pooling layer of the Resnet model.

These representations are then fed into a linear classifier 230 which encourages the distance in the representations of a same pair to be small, and the distances of representations from different pairs to be large.

This implementation offers the advantage of providing a simpler architecture than those of the prior art that implement a projection head which is discarded when the training is done.

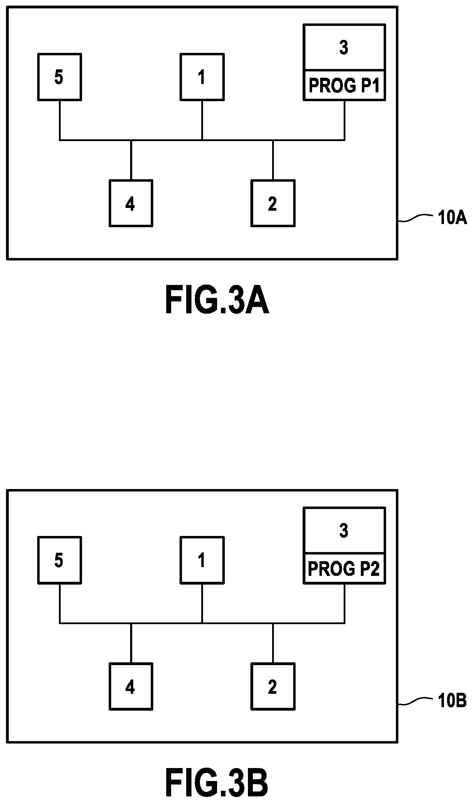

Figure 3A illustrates an example of the hardware architecture of the training device 10A for the implementation of the training method according to the invention.

To this end, the training device 10A has the hardware architecture of a computer. As shown in Figure 3A, the training device 10A comprises, in particular, a processor 1, a random access memory 2, a read-only memory 3, a non-volatile memory 4 and communication means 5.

The read-only memory 3 of the training device 10A constitutes a recording medium conforming to the invention, which is readable by processor 1 and on which is recorded a computer program PROG_P1 conforming to the invention, containing instructions for carrying out the steps of the training method according to the invention. The program PROG_P1 defines functional modules of the training device 10A, which are based on or control the aforementioned elements 1 to 5 of the training device 10A, and which comprise in particular:

- an obtaining module MOD_OBT, configured to obtain a classification model,
- a training module MOD_TRN, configured to jointly train the representation backbone and the linear classifier of the classification model by minimizing a loss function, and,
- an updating module MOD_UPD, configured to update the classification model.

The functionalities attached to each of the modules are explained in detail later on when describing modes of implementation of said classification method.

In an implementation, the classification model is initially stored in a memory equipping an entity external to the training device 10A (e.g., a database server). Therefore, in this implementation, the obtaining module MOD_OBT is integrated to the communication means 5 and configured to obtain the classification model. In other words, the classification model (i.e. the code instructions defining said classification model) is obtained via a data exchange (transmission/reception) controlled by the obtaining module MOD_OBT and carried out by the communication means 5 of the training device 10A as well as by communication means suitable for transmission equipping said external entity. Such an exchange of data between the obtaining module MOD_OBT and said external entity is carried out via a communication interface. No limitation is attached to the nature of this communication interface, which may be wired or non-wired, and may implement any protocol known to the man skilled in the art (Ethernet, Wi-Fi, Bluetooth, 3G, 4G, 5G, etc.).

In general, no limitation is attached to the way in which the training device 10A obtains the classification model.

In its general principle, the training method according to the invention aims at proposing a novel procedure for training a classification model comprising a representation backbone and a classifier which are not trained one after the other as this is the case with the methods of the prior art, but are rather jointly trained by minimizing a loss function which depends on parameters of the representation backbone and weights of the linear classifier.

Figure 3B illustrates an example of the hardware architecture of the classification device 10B for the implementation of the training method according to the invention.

To this end, the classification device 10B has the hardware architecture of a computer. As shown in Figure 3B, the classification device 10B comprises, in particular, a processor 1, a random access memory 2, a read-only memory 3, a non-volatile memory 4 and communication means 5.

The read-only memory 3 of the classification device 10B constitutes a recording medium conforming to the invention, which is readable by processor 1 and on which is recorded a computer program PROG_P2 conforming to the invention, containing instructions for carrying out the steps of the classification method according to the invention. The program PROG_P2 defines functional modules of the classification device 10B, which are based on or control the aforementioned elements 1 to 5 of the classification device 10B, and which comprise in particular:

- an obtaining module MOD_OBT_CL configured to obtain an updated classification model previously trained by the training device 10A, and,
- a classification module MOD_CLASS, configured to classify the input samples using the updated classification model.

In an implementation, the updated classification model is initially stored in a memory equipping an entity external to the classification device 10B (e.g., a database server). Therefore, in this implementation, the obtaining module MOD_OBT_CL is integrated to the communication means 5 and configured to obtain the updated classification model. In other words, the updated classification model (i.e. the code instructions defining said updated classification model) is obtained via a data exchange (transmission/reception) controlled by the obtaining module MOD_OBT_CL and carried out by the communication means 5 of the classification device 10B as well as by communication means suitable for transmission equipping said external entity. Such an exchange of data between the obtaining module MOD_OBT_CL and said external entity is carried out via a communication interface. No limitation is attached to the nature of this communication interface, which may be wired or non-wired, and may implement any protocol known to the man skilled in the art (Ethernet, Wi-Fi, Bluetooth, 3G, 4G, 5G, etc.).

In general, no limitation is attached to the way in which the classification device 10B obtains the classification model.

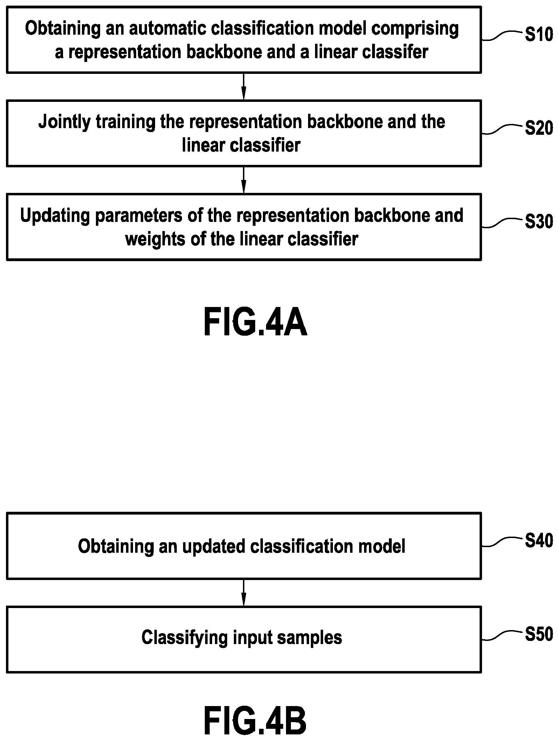

Figure 4A is a flowchart illustrating the main steps of the training method according to the invention, these steps being carried out by the training device 10A.

As shown in Figure 4A, the training method comprises a step S10 of obtaining the classification model. This obtaining step S10 is performed by the obtaining module MOD_OBT of the training device 10A.

In accordance with the features henceforth considered for the obtaining module MOD_OBT, step S10 thus includes a reception of the classification model from an external entity initially storing said classification model. This classification model comprises a representation backbone configured to generate a representation of each of the input samples and to group the input samples into clusters according to a similarity criteria of the representations associated to the input samples. It also comprises a classifier configured for assigning a vector P1 (also named "prototype") to a cluster, each component P1[k] of the vector P1 corresponding to a classifier weight of the cluster belonging to class c[k] in set E;

Once step S10 has been performed, the classification model is stored in a memory of the training device 10A and the training method also comprises a step S20 of jointly training the representation backbone and the classifier by minimizing a loss function which depends on parameters of the representation backbone and weights of the classifier. This training step is performed by the training module MOD_TRN of the training device 10A, and is further detailed hereafter.

The training of the classification model allows determining in step S30 an updated classification model comprising updated parameters of the representation backbone, and/or updated weights of the classifier. This updating step is performed by the updating module MOD_UPD of the training device 10A.

First implementation

In an implementation, the loss function $\ell$ corresponds to a sum of a first loss function optimizing the representation backbone and of a second loss function optimizing the linear classifier. The first loss function leads to group input samples of one cluster close together and far from input samples from other clusters, and the second loss function is configured to maximize the similarity between vectors of a cluster and input samples belonging to said cluster.

More precisely, the first loss function may be compliant with the supervised contrastive loss approach, and may be expressed as follows:

$$\ell_{\text{SupCon}} = \frac{1}{2N} \sum_{i}^{2N} \ell_{\text{SupCon}}(\mathbf{z}_i, P_i) \qquad [1]$$

$$\ell_{\text{SupCon}}(\mathbf{z}_i, P_i) =$$

$$-\frac{1}{|P_i|} \sum_{\mathbf{z}_p \in P_i} \log \frac{\exp\big(\text{sim}(\mathbf{z}_i, \mathbf{z}_p)/\tau\big)}{\sum_{j \neq i} \exp\big(\text{sim}(\mathbf{z}_i, \mathbf{z}_j)/\tau\big)} =$$

$$\frac{1}{|P_i|} \sum_{\mathbf{z}_p \in P_i} \left( -(\mathbf{z}_i^\top \mathbf{z}_p)/\tau + \log \sum_{j \neq i} \exp\big((\mathbf{z}_i^\top \mathbf{z}_j)/\tau\big) \right) \qquad [2]$$

where N is a number of samples, $\tau$ is a temperature hyper-parameter that controls the sensitivity of the dot product between two vectors, the pairs $(\mathbf{z}_i, \mathbf{z}_j)$ consist of representations of two differently augmented views of the same input samples, $\text{sim}(\mathbf{z}_i, \mathbf{z}_j) = \frac{\mathbf{z}_i^\top \mathbf{z}_j}{\|z_i\| \cdot \|z_j\|}$ is the cosine similarity with $\mathbf{z}_i^\top \mathbf{z}_j$ the dot product between two vectors, $P_i$ is the set of representations $\mathbf{z}_p$ forming positive pairs for the i-th sample, and the index j iterates over all (original and augmented) samples.

The person skilled in the art can consult the following articles to obtain further details on the previous loss function: "A Simple Framework For Contrastive Learning of Visual Representations", Chen & Al., In International Conference on Machine Learning, pp 1597-1607, 2020 and "Supervised Contrastive Learning", Khosla & Al., arXiv:2004.11362, 2020.

In an alternative, the first loss function may be compliant with the Simplified Pairwise Cross Entropy (SPCE) approach, a variant of the well-known Cross Entropy (CE) approach, and may be expressed as follows:

$$\ell_{\text{SPCE}} = -\frac{1}{N} \sum_{i=1}^{N} \log \frac{\exp\left(\frac{1}{N} \sum_{j:y_j=y_i} \mathbf{z}_j^\top \mathbf{z}_i\right)}{\sum_{k=1}^{K} \exp\left(\frac{1}{N} \sum_{j:y_j=k} \mathbf{z}_j^\top \mathbf{z}_i\right)} \qquad [3]$$

where K is a number of classes.

These first loss functions aim at grouping samples of a given cluster close together and far from the samples from other clusters. Regarding for example equation [3], the tightness part $\exp\left(\frac{1}{N} \sum_{j:y_j=y_i} \mathbf{z}_j^\top \mathbf{z}_i\right)$ encourages the grouping of samples of a given cluster close together, and the contrastive part $\sum_{k=1}^{K} \exp\left(\frac{1}{N} \sum_{j:y_j=k} \mathbf{z}_j^\top \mathbf{z}_i\right)$ encourages the grouping of samples of a given cluster far from the samples from other clusters.

In the following, the classifier is a linear classifier with no bias term. In order to learn the parameters of this classifier 330, the weight vectors of the classifier are considered as prototypes and these prototypes are learned to be close to the samples of each class.

Assuming that both the representations and the classifier weights are normalized vectors, the second loss function may be expressed as follows:

$$\ell_{\text{tt}} = \frac{1}{N'} \sum_{i}^{N'} - \mathbf{z}_i^{\top} \boldsymbol{\theta}_{y_i} \qquad [4]$$

with $N'$ a number of samples (including the $N$ input samples plus the augmented views), $\mathbf{z}_i$ the representation for the $i$-th sample having label $y_i \in \{1, ..., K\}$, and $\theta_{y_i} = (\theta_1, ..., \theta_K)$ the weights of the linear classifier.

In an implementation, a training method with no stop gradients may be tested to examine its performance. In an alternative or if the performance is inferior to a predetermined threshold, a gradient descent is then applied for finding the minimum of the loss function $\ell$. The gradient of the $\ell_{\text{tt}}$ loss w.r.t. the classifier weights can be directly derived from equation [4]:

$$\frac{\partial \ell_{\text{tt}}}{\partial \boldsymbol{\theta}_k} = -\frac{1}{N} \sum_{i:y_i=k} \mathbf{z}_i \qquad [5]$$

**Through** minimizing this second second loss function $\ell_{\text{tt}}$ jointly with the first function $\ell_{\text{SupCon}}$ or $\ell_{\text{SPCE}}$ applied to the backbone representation network, the classifier weights $\theta = (\theta_1, ..., \theta_K)$ are determined using the following iterative formula:

$$\boldsymbol{\theta}_k^0 = \eta \frac{1}{N} \sum_{i:y_i=k} \mathbf{z}_i^0, \; \boldsymbol{\theta}_k^{t+1} = \boldsymbol{\theta}_k^t + \eta \frac{1}{N} \sum_{i:y_i=k} \mathbf{z}_i^{t+1} \qquad [6]$$

where $t$ is an iteration index and $\eta$ is a learning rate.

Second implementation

In that second implementation, the learned prototype associated to a cluster is considered as a representation of said cluster, and the loss function is configured to update parameters $\theta_{y_i}$ of the prototype assigned to that cluster so that said prototype is close to the input samples of that cluster, and far from the input samples of other clusters.

The second loss function $\ell_{\text{ESupCon}}$ may be expressed as follows:

$$\ell_{\text{ESupCon}} = \frac{1}{2N + K} \left( \sum_{k=1}^{K} \ell_{\text{clSup}}(\boldsymbol{\theta}_k) + \sum_{i}^{2N} \ell_{\text{SupCon}}(\mathbf{z}_i, P_i) \right) \qquad [7]$$

with

- $\theta_k$ a weight of the linear classifier,
- $P_i$ a set of representations $\mathbf{z}_p$ forming positive pairs for the i-th input sample,
- $\mathbf{z}_i$ the representation for the $i$-th sample having label $y_i \in \{1, ..., K\}$,
- $\ell_{\text{clSup}}(\boldsymbol{\theta}_k) = \frac{1}{2N_k} \sum_{i:y_i=k} \ell_{\text{clSup}}(\mathbf{z}_i, \boldsymbol{\theta}_k)$ with $N_k$ the number of the non-augmented samples in the k-th class,
- $\ell_{\text{clSup}}(\mathbf{z}_i, \theta_{y_i}) = -\mathbf{z}_i^{\top} \boldsymbol{\theta}_{y_i} + \log \left( \sum_{k=1}^{K} \exp(\mathbf{z}_i^{\top} \boldsymbol{\theta}_k) + \sum_{j=1:j\neq i}^{2N} \exp(\mathbf{z}_i^{\top} \mathbf{z}_j) \right)$

Figure 4B is a flowchart illustrating the main steps of the classification method according to the invention, these steps being carried out by the classification device 10B.

As shown in Figure 4B, the classification method comprises a step S40 of obtaining the classification model trained by the training device 10A. This obtaining step S40 is performed by the obtaining module MOD_OBT_CL of the classification device 10B.

Once step S40 has been performed, the updated classification model is used to classify the input samples of set E in step S50. This classifying step is performed by the classification module MOD_CLAS of the classification device 10B.

Experiments and results

A ResNet50, e.g., a convolutional neural network that is 50 layers deep, has been used as the backbone network, and the datasets Cifar-100, Cifar-10, and Tiny ImageNet (a subset of 200 classes from ImageNet with a size of 32x32) were considered to evaluate performance. In the experiment, the following configurations were considered:

i. learning of the parameters of the representation backbone with the SupCon loss (equation 1) and learning of the weights of the linear classifier with the standard Cross entropy loss ($\ell_{SupCon} + \ell_{CE}$). This configuration requires a projection head as illustrated by Figure 2.

ii. learning of the parameters of the representation backbone with the SupCon loss ($\ell_{SupCon}$) and learning weights of the linear classification layer with the standard Cross entropy loss with no bias term, representations and normalized classifier weights ($\ell_{SupCon} + \ell_{CE}(n)$). This configuration requires a projection head as illustrated by Figure 2.

iii. learning of the parameters of the representation backbone with the SupCon loss ($\ell_{SupCon}$) and learning of the weights of the linear classifier with the "tightness loss" $\ell_{tt}$ (equation 4). This configuration requires a projection head as illustrated by Figure 2.

iv. learning of the parameters of the representation backbone with the SPCE loss (equation 3) and learning of the weights of the linear classifier with the "tightness loss" $\ell_{tt}$ (equation 4). This configuration does not require a projection head as illustrated by Figure 3.

v. learning of the parameters of the representation backbone and of the weights of the linear classifier with equation [7] ($\ell_{ESupCon}$). This configuration does not require a projection head as illustrated by Figure 3.

For all configurations, a batch size of 1024 was used, except for configuration iv. for which a batch size of 2024 was used. For configurations i. and ii., the linear classifier was optimized for 100 epochs with a batch size of 500 after the optimization of the SupCon loss.

Table 1 provides the accuracy (as a percentage) with limited data settings. N represents the number of samples used for the training. Absolute gains over cross entropy are reported in blue and absolute declines in red. * indicates the use of a projection head. The last column shows an average improvement or decline over a cross entropy-based approach, across the datasets and the settings. Results for configurations v. and iv. are significantly better than those of configurations i. (and ii.), while being trained with no projection head. Configuration v. is much more robust than configuration iv. with the least amount data on both Cifar-10 and Tiny ImageNet datasets.

**[Table 1]**

| Method | CIFAR-10 | | | CIFAR-100 | | | Tiny ImageNet | | | Avg. |
|---|---|---|---|---|---|---|---|---|---|---|
| | $N$ = 2K | $N$ = 5K | $N$ = 10K | $N$ = 8K | $N$ = 10K | $N$ = 20K | $N$ = 20K | $N$ = 50K | $N$ = 70K | |
| CE | 44.10 | 63.02 | 78.68 | 33.51 | 40.61 | 55.30 | 35.50 | 52.78 | 57.53 | - |
| *SupCon+CE | 72.27 +28.1 | 82.37 +19.3 | 88.03 +9.3 | 50.96 +17.4 | 54.49 +13.8 | 64.39 +9.0 | 44.00 +8.5 | 59.24 +6.4 | 62.88 +5.3 | +13.0 |
| *SupCon+CE(n) | 71.99 +27.8 | 82.73 +19.7 | 87.91 +9.2 | 50.60 +17.0 | 53.92 +13.3 | 63.27 +7.9 | 43.50 +8.0 | 57.62 +4.8 | 59.62 +2.0 | +12.2 |
| *SupCon+Tt | 72.17 +28.0 | 82.97 +19.9 | 87.37 +8.6 | 51.23 +17.7 | 54.49 +13.8 | 64.28 +8.9 | 43.82 +8.3 | 52.21 -0.5 | 57.88 +0.3 | +11.7 |
| SPCE | 31.81 -12.2 | 78.60 +15.5 | 86.15 +7.4 | 50.09 +16.5 | 53.78 +13.1 | 64.82 +9.5 | 40.94 +5.4 | 55.70 +2.9 | 55.49 -2.0 | +6.26 |
| ESupCon | 72.42 +28.3 | 82.03 +19.0 | 87.04 +8.3 | 50.10 +16.5 | 53.33 +12.7 | 63.21 +7.9 | 42.61 +7.1 | 55.30 +2.5 | 59.97 +2.4 | +11.6 |

Table 2 provides the accuracy (as a percentage) when data are not uniformly distributed. Some classes are under-sampled while others are oversampled. This scenario is generated by altering the training data in which half of the categories are underrepresented with a number of samples equals to the imbalance rate (IR) of other classes.

**[Table 2]**

| Method | CIFAR-10 | | | CIFAR-100 | | | Tiny ImageNet | | | Avg. |
|---|---|---|---|---|---|---|---|---|---|---|
| | IR = 0.05 | IR = 0.1 | IR = 0.5 | IR = 0.05 | IR = 0.1 | IR = 0.5 | IR = 0.05 | IR = 0.1 | IR = 0.5 | |
| CE | 81.50 | 86.48 | 93.55 | 46.55 | 51.62 | 71.65 | 38.71 | 43.28 | 56.29 | - |
| *SupCon+CE | 79.94 -1.5 | 86.86 +0.3 | 94.34 +0.7 | 46.79 +0.2 | 44.21 -7.4 | 71.13 -0.5 | 44.96 +6.2 | 49.57 +6.2 | 62.45 +6.1 | +1.17 |
| *SupCon+CE (n) | 47.77 -33.7 | 47.64 -38.8 | 90.14 -3.4 | 40.00 -6.5 | 40.32 -11.3 | 55.94 -15.7 | 35.69 -3.0 | 35.61 -7.6 | 37.70 -18.5 | -15.4 |
| *SupCon+Tt | 85.62 +4.1 | 88.76 +2.2 | 94.40 +0.8 | 54.40 +7.8 | 56.79 +5.1 | 70.38 -1.2 | 44.11 +5.4 | 47.39 +4.1 | 57.30 +1.0 | +3.28 |
| SPCE | 85.62 +4.1 | 86.94 +0.4 | 93.95 +0.4 | 49.59 +3.0 | 53.78 +2.1 | 68.61 -3.0 | 37.27 -1.4 | 40.55 -2.7 | 61.14 +4.8 | +0.86 |
| ESupCon | 86.00 +4.5 | 89.12 +2.6 | 94.25 +0.7 | 53.29 +6.7 | 57.05 +5.4 | 70.04 -1.6 | 40.74 +2.0 | 44.86 +1.5 | 59.85 +3.5 | +2.84 |

First of all, models trained with cross entropy alone perform the worst, which shows that cross entropy training is vulnerable to imbalanced data, but for configuration i., the observed performance is considerably boosted. However, it can be noticed that configuration iii. performs better than configuration i., especially with higher imbalance rates. Configuration iv. is more robust to this setting than pure cross entropy training, showing the effect of considering all pairs in the data on increasing the robustness of the learned representation. However, performance of configuration iv. is in general inferior to that of configurations iii. and v. Configuration v. is overall better than configuration iii. except for Tiny ImageNet. Overall, configurations iii. and v. show quite stable performance under different imbalanced scenarios and an ability to generalize and learn good decision boundaries for all classes.

Table 3 provides the accuracy (as a percentage) with noisy data. The objective was to test the different configurations to learn generalizable decision boundaries in spite of the presence of wrongly labelled samples. To simulate this scenario, during the training step, a percentage of the training data, denoted by noise rate (NR), has been associated with wrong labels (or "shuffled labels"). Table 3 reports the average test accuracy on Cifar-10, Cifar-100 and Tiny ImageNet with noise rates of 0.2; 0.3 and 0.5.

**[Table 3]**

| Method | CIFAR-10 | | | CIFAR-100 | | | Tiny ImageNet | | | Avg. |
|---|---|---|---|---|---|---|---|---|---|---|
| | NR = 0.5 | NR = 0.3 | NR = 0.2 | NR = 0.5 | NR = 0.3 | NR = 0.2 | NR = 0.5 | NR = 0.3 | NR = 0.2 | |
| CE | 59.29 | 85.91 | 87.15 | 33.99 | 55.10 | 163.23 | 28.83 | 44.65 | 51.23 | - |
| *SupCon+CE | 48.08 -11.2 | 74.47 -11.4 | 85.94 -1.2 | 34.78 +0.7 | 58.06 +2.9 | 65.57 +2.3 | 31.81 +2.9 | 46.20 +1.5 | 54.74 +3.5 | -1.08 |
| *SupCon+CE (n) | 46.35 -12.9 | 77.42 -8.4 | 87.45 +0.3 | 33.55 -0.4 | 62.44 +7.3 | 67.87 +4.6 | 28.88 ±0.0 | 54.64 +9.9 | 58.62 +7.3 | +0.87 |
| *SupCon+Tt | 58.05 -1.2 | 89.70 +3.7 | 90.66 +3.5 | 37.23 +3.2 | 67.76 +12.6 | 69.41 +6.1 | 28.67 -0.1 | 54.81 +10.1 | 57.93 +6.7 | +4.98 |
| SPCE | 65.63 +6.3 | 88.77 +2.8 | 88.93 +1.7 | 36.56 +2.5 | 60.35 +5.2 | 65.75 +2.5 | 25.27 -3.5 | 42.45 -2.2 | 49.52 -1.7 | +1.53 |
| ESupCon | 61.17 +1.8 | 88.01 +2.1 | 89.70 +2.5 | 36.05 +2.0 | 61.66 +6.5 | 64.29 +1.0 | 30.75 +1.9 | 47.87 +3.2 | 55.91 +4.6 | +2.89 |

Again here, in general, Cross Entropy training provides results with a lower performance compared to the other studied training configurations.

Except when the Tiny ImageNet data is used, configuration iv. performance is higher than that of Cross Entropy or even of configurations ii and iii.

Performance of configuration v. is comparable to that of configuration iv. on Cifar-10 and Cifar-100, and significantly better on the Tiny ImageNet dataset. Overall, best results are shown by both the configurations v. and iii.

Use case

As indicated above, the classification system 10 according to the invention may be used in several different contexts. In an example, the classification system may be embedded in a vehicle and coupled to a driver assistance system of this vehicle.

According to that example, the vehicle comprises sensors such as a camera or a radar/lidar to capture images of its surroundings. A captured image is then considered as an input sample of the classification device, so as to determine whether this captured image comprises or not a particular "object" (such as another vehicle, a pedestrian, a bike, etc.).The classification system 10 may also be used to classify traffic signs, objects detected on a road, or even actions of a mobile object.

While this specification contains many specific implementation details, these should not be construed as limitations on the scope of what can be claimed, but rather as descriptions of features that can be specific to particular implementations. Certain features that are described in this specification in the context of separate implementations can also be implemented, in combination, in a single implementation. Conversely, various features that are described in the context of a single implementation can also be implemented in multiple implementations, separately, or in any subcombination. Moreover, although previously described features can be described as acting in certain combinations and even initially claimed as such, one or more features from a claimed combination can, in some cases, be excised from the combination, and the claimed combination can be directed to a sub-combination or variation of a sub-combination.

Particular implementations of the subject matter have been described. Other implementations, alterations, and permutations of the described implementations are within the scope of the following claims as will be apparent to those skilled in the art. While operations are depicted in the drawings or claims in a particular order, this should not be understood as requiring that such operations be performed in the particular order shown or in sequential order, or that all illustrated operations be performed (some operations can be considered optional), to achieve desirable results. In certain circumstances, multitasking or parallel processing (or a combination of multitasking and parallel processing) can be advantageous and performed as deemed appropriate.

Moreover, the separation or integration of various system modules and components in the previously described implementations should not be understood as requiring such separation or integration in all implementations, and it should be understood that the described program components and systems can generally be integrated together in a single software product or packaged into multiple software products.

Furthermore, any claimed implementation is considered to be applicable to at least a computer-implemented method; a non-transitory, computer-readable medium storing computer-readable instructions to perform the computer-implemented method; and a computer system comprising a computer memory interoperably coupled with a hardware processor configured to perform the computer-implemented method or the instructions stored on the non-transitory, computer-readable medium.

**Claims**

1. A computer-implemented method for training a classification model, said method comprising the steps of:

   - obtaining (S10) a classification model comprising a representation backbone (320) configured to generate a representation of input samples and to group the input samples into clusters according to a similarity criteria of the representations associated to the input samples, the classification model further comprising a linear classifier (330) configured for assigning a vector P1 to a cluster, each component P1[k] of the vector P1 corresponding to an estimate of the probability of the cluster belonging to a class c[k], k ranging from 1 to K;
   - jointly training (S20) the representation backbone and the linear classifier by minimizing a loss function which depends on parameters of the representation backbone and weights of the linear classifier; and,
   - updating (S30) parameters of the representation backbone and weights of the linear classifier, so as to obtain an updated classification model.

2. The method of Claim 1, wherein the loss function corresponds to a sum of a first loss function optimizing the representation backbone and of a second loss function optimizing the linear classifier,

   wherein the first loss function leads to group input samples of one cluster close together and far from input samples from other clusters,
   wherein the second loss function is configured to maximize the similarity between vectors of a cluster and input samples belonging to said cluster.

3. The method of Claim 2, wherein the second loss function $\ell_{tt}$ is expressed as

$$\ell_{tt} = \frac{1}{N} \sum_{i}^{N} - \mathbf{z}_i^{\mathsf{T}} \boldsymbol{\theta}_{y_i}$$

with $N$ a number of samples, $\mathbf{z}_i$ the representation for the $i$-$th$ sample having label $y_i \in \{1, ..., K\}$, and $\theta_{y_i} = (\theta_1, ..., \theta_K)$ the weights of the linear classifier.

4. The method of Claim 3, wherein training the linear classifier comprises minimizing the second loss function $\ell_{tt}$ by applying a gradient on the second loss function $\ell_{tt}$ such that

$$\frac{\partial \ell_{tt}}{\partial \boldsymbol{\theta}_k} = -\frac{1}{N} \sum_{i:y_i=k} \mathbf{z}_i$$

without impacting the parameters of the representation backbone,
wherein the weights of the linear classifier are iteratively updated such that

$$\boldsymbol{\theta}_k^0 = \boldsymbol{\theta}_k^t + \eta \frac{1}{N} \sum_{i:y_i=k} \mathbf{z}_i^{t+1}$$

with $t$ an iteration index and $\eta$ a learning rate.

5. The method of one of Claims 2 to 4, further comprising generating augmented views from the input samples, wherein the first loss function is a supervised contrastive loss $\ell_{SupCon}$ expressed as

$$\ell_{SupCon} = \frac{1}{2N} \Sigma_i^{2N} \ell_{SupCon}(\mathbf{z}_i, P_i)$$

and

$$\ell_{SupCon}(\mathbf{z}_i, P_i) =$$
$$-\frac{1}{|P_i|} \sum_{\mathbf{z}_p \in P_i} \log \frac{\exp(\text{sim}(\mathbf{z}_i, \mathbf{z}_p)/\tau)}{\Sigma_{j \neq i} \exp(\text{sim}(\mathbf{z}_i, \mathbf{z}_j)/\tau)} =$$
$$\frac{1}{|P_i|} \sum_{\mathbf{z}_p \in P_i} \left( -(\mathbf{z}_i^{\mathsf{T}} \mathbf{z}_p)/\tau + \log \sum_{j \neq i} \exp\left( (\mathbf{z}_i^{\mathsf{T}} \mathbf{z}_j)/\tau \right) \right)$$

with $(\mathbf{z}_i, \mathbf{z}_j)$ a pair of representations of two different augmented views of a same input sample, $\text{sim}(\mathbf{z}_i, \mathbf{z}_j) = \frac{\mathbf{z}_i^{\mathsf{T}} \mathbf{z}_j}{\|\mathbf{z}_i\| \cdot \|\mathbf{z}_j\|}$ the cosine similarity, $P_i$ the set of representations $\mathbf{z}_p$ forming positive pairs for the $i$-th input sample, $j$ an index iterating over all input samples, $\mathbf{z}_i^{\mathsf{T}} \mathbf{z}_p$ the dot product between two vectors, and $\tau$ a

temperature hyper-parameter controlling the sensitivity of the product.

6. The method of one of Claims 2 to 4, further comprising generating augmented views from the input samples, wherein the first loss function is a simplified pairwise cross entropy loss $\ell_{\text{SPCE}}$ expressed as

$$\ell_{\text{SPCE}} = -\frac{1}{N}\sum_{i=1}^{N} \log \frac{\exp\left(\frac{1}{N}\Sigma_{j:y_j=y_i}\ z_j^{\top}z_i\right)}{\sum_{k=1}^{K}\ \exp\left(\frac{1}{N}\Sigma_{j:y_j=k}\ z_j^{\top}z_i\right)}$$

with $N$ a number of input samples, $(z_i, z_j)$ a pair of representations of two different augmented views of a same input sample, $\text{sim}(z_i, z_j) = \dfrac{z_i^{\top}z_j}{\|z_i\|\cdot\|z_j\|}$ the cosine similarity, $P_i$ the set of representations $z_p$ forming positive pairs for the i-th input sample, j an index iterating over all input samples, $z_i^{\top}z_p$ the dot product between two vectors, and $\tau$ a temperature hyper-parameter controlling the sensitivity of the product.

7. The method of Claim 1, wherein the vector P1 assigned to a cluster is considered as a sample of said cluster,

wherein the sample and the vector P1 are in a same embedding space,
wherein the loss function is configured to update parameters $\theta_{y_i}$ of the vector P1 assigned to that cluster so that said vector P1 is close to the samples of that cluster, and far from the samples of other clusters.

8. The method of Claim 1 or 7, further comprising generating augmented views from the input samples, wherein the loss function is expressed as

$$\ell_{\text{ESupCon}} = \frac{1}{2N+K}\left(\sum_{k=1}^{K}\ell_{\text{clSup}}(\boldsymbol{\theta}_k) + \sum_{i}^{2N}\ell_{\text{SupCon}}\ (z_i, P_i)\right)$$

with

- $N$ a number of input samples,
- $\theta_k$ a weight of the linear classifier,
- $P_i$ a set of representations $z_p$ forming positive pairs for the i-th input sample,
- $z_i$ the representation for the $i$ - $th$ sample having label $y_i \in \{1, ..., K\}$,
- $\ell_{\text{clSup}}(\boldsymbol{\theta}_k) = \frac{1}{2N_k}\Sigma_{i:y_i=k}\ \ell_{\text{clSup}}(z_i, \boldsymbol{\theta}_k)$ with $N_k$ the number of the non-augmented samples in the k-th class,
- $\ell_{\text{clSup}}(z_i, \theta_{y_i}) =$
$-z_i^{\top}\boldsymbol{\theta}_{y_i} + \log\left(\sum_{k=1}^{K}\ \exp(z_i^{\top}\boldsymbol{\theta}_k) + \sum_{j=1:j\neq i}^{2N}\ \exp(z_i^{\top}z_j)\right)$, $z_i^{\top}z_p$ the dot product between two vectors,
-
$$\ell_{\text{SupCon}}\ (z_i, P_i) =$$
$$-\frac{1}{|P_i|}\Sigma_{z_p\in P_i}\ \log \frac{\exp(\text{sim}(z_i,z_p)/\tau)}{\Sigma_{j\neq i}\exp(\text{sim}(z_i,z_j)/\tau)} =$$
$$\frac{1}{|P_i|}\Sigma_{z_p\in P_i}\ \left(-(z_i^{\top}z_p)/\tau + \log\Sigma_{j\neq i}\ \exp\left((z_i^{\top}z_j)/\tau\right)\right)$$

with $(z_i, z_j)$ a pair of representations of two different views of a same input sample, $\text{sim}(z_i, z_j) = \dfrac{z_i^{\top}z_j}{\|z_i\|\cdot\|z_j\|}$ the cosine similarity, $P_i$ the set of representations $z_p$ forming positive pairs for the i -th input sample, j an index iterating over all input samples, $\mathbf{z}_i^\top \mathbf{z}_p$ the dot product between two vectors, and $\tau$ a temperature hyper-parameter controlling the sensitivity of the product.

9. A computer program including instructions for executing the steps of a training method according to any one of Claims 1 to 8 when said program is executed by a computer.

10. A recording medium readable by a computer and having recorded thereon a computer program according to Claim 9.

11. A device for training a classification model, said device being configured to perform a training method according to any one of Claims 1 to 8.

12. A computer-implemented method for classifying input samples of an unlabelled set E' into classes c[K], k ranging from 1 to K, said method comprising :

    - obtaining (S40) an updated classification model generated by performing the training method of one of Claims 1 to 8; and,
    - classifying (S50) the input samples of set E' using the updated classification model.

13. A device for classifying input samples of an unlabelled set E' into classes c[K], k ranging from 1 to K, said device being configured to perform a classification method according to claim 12.

14. A computer-implemented method of improving a driver assistance system of a vehicle implementing the classification method according to Claim 12, wherein the input samples correspond to images captured by at least one sensor associated to said vehicle.

15. A device for improving a driver assistance system, said device being configured to perform a method of improving a driver assistance system according to 14.

MOD OBT

MOD TRN

MOD UPD

— 10A

## FIG.1A

MOD OBT CL

MOD CLASS

— 10B

## FIG.1B

**FIG.2**

## FIG.3A

10A

## FIG.3B

10B

Obtaining an automatic classification model comprising a representation backbone and a linear classifer — S10

Jointly training the representation backbone and the linear classifier — S20

Updating parameters of the representation backbone and weights of the linear classifier — S30

# FIG.4A

Obtaining an updated classification model — S40

Classifying input samples — S50

# FIG.4B

Europäisches
Patentamt

European
Patent Office

Office européen
des brevets

# EUROPEAN SEARCH REPORT

Application Number

EP 22 17 8858

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ANUBRATA DAS ET AL: "ProtoTEx: Explaining Model Decisions with Prototype Tensors", ARXIV.ORG, CORNELL UNIVERSITY LIBRARY, 201 OLIN LIBRARY CORNELL UNIVERSITY ITHACA, NY 14853, 11 April 2022 (2022-04-11), XP091202388, * abstract * * Chapters 1-6; page 1 - page 9; figures 1-6 * | 1-15 | INV. G06N20/00 G06N3/04 G06N3/08 |
| X | US 2021/374553 A1 (LI JUNNAN [SG] ET AL) 2 December 2021 (2021-12-02) * abstract * * paragraph [0002] - paragraph [0005] * * paragraph [0027] - paragraph [0078]; figures 1-6 * | 1-15 | |

TECHNICAL FIELDS
SEARCHED     (IPC)

G06N

The present search report has been drawn up for all claims

| Place of search | Date of completion of the search | Examiner |
|---|---|---|
| The Hague | 15 November 2022 | Hasnas, Sergiu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 17 8858

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2022

| Patent document cited in search report | Publication date | Patent family member(s) | Publication date |
|---|---|---|---|
| US 2021374553 A1 | 02-12-2021 | NONE | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHEN & AL.** A Simple Framework For Contrastive Learning of Visual Representations. *ternational Conference on Machine Learning,* 2020, 1597-1607

- **KHOSLA & AL.** Supervised Contrastive Learning. *arXiv:2004.11362,* 2020